# EUROPEAN PATENT APPLICATION

(11) **EP 3 327 502 A1**
(43) Date of publication of application: **30.05.2018**
(21) Application number: 17197140.1
(22) Date of filing: 18.10.2017
(51) Int. Cl.: G03B 21/00, G03B 21/14, G03B 21/16

(54) **IMAGE PROJECTOR AND IMAGE PROJECTING SYSTEM INCORPORATING SAME**

(30) Priority: 24.11.2016 JP 2016228000
(71) Applicant: Ricoh Company, Ltd., Tokyo 143-8555 (JP)
(72) Inventor: NISHIMORI, Takehiro, Tokyo, 143-8555 (JP); FUJIOKA, Tetsuya, Tokyo, 143-8555 (JP); MIKUTSU, Yasunari, Tokyo, 143-8555 (JP); TSUCHIYA, Satoshi, Tokyo, 143-8555 (JP); KANAI, Hideo, Tokyo, 143-8555 (JP); MASHIMO, Jun, Tokyo, 143-8555 (JP)
(74) Representative: J A Kemp

(57) **Abstract**

An image projector (1) includes a first housing (4), a second housing (5), a power transmitter (7), and a heat transporter (6a, 6b). The first housing (4) includes a light source (13) to emit light, an image display (29) to form an image with the light, an illumination optical device (50) to direct the light to the image display (29), and a projection optical device (3) to project the image. The second housing (5) includes a power source (8) to supply power, a heat dissipator (10) to dissipate heat, and a cooler (11) to exhaust the heat. The power transmitter (7) and the heat transporter (6a, 6b) couples the first housing (4) and the second housing (5) to each other to transmit the power from the second housing (5) to the first housing (4), and to transport heat from the first housing (4) to the second housing (5), respectively.

## Description

### BACKGROUND

### Technical Field

Embodiments of the present disclosure generally relate to an image projector and an image projecting system incorporating the image projector.

### Related Art

Various types of image projectors are known to project images onto a surface. Such image projectors usually include a light source, an image display or an optical modulator, and an optical system. Specifically, in such image projectors, for example, the light source emits light. The image display or the optical modulator, such as a digital micromirror device (DMD) or a liquid crystal panel, forms images with the light emitted by the light source, according to image data or video data transmitted from, e.g., information processing apparatuses such as personal computers, video playback devices such as digital versatile disc (DVD) players, or imaging devices such as digital cameras. The images thus formed are projected onto a surface such as a screen through the optical system that includes a plurality of lenses. Thus, the image projectors project images onto the surface.

Such image projectors typically employ a high-intensity discharge (HID) lamp as the light source. However, recent image projectors often incorporate a light source device that includes a solid-state light emitter and a phosphor. The solid-state light emitter emits excitation light. The phosphor absorbs the excitation light and converts the excitation light into light having a given wavelength band. As the solid-state light emitter, a semiconductor element is used such as a light emitting diode (LED), a laser diode (LD), or an organic electroluminescence (OEL).

Compared to a discharge lamp, the solid-state light emitter enhances, e.g., color reproducibility, luminous efficiency, and light use efficiency, while lengthening the lifespan of the light source. Since the solid-state light emitter is a point light source and emits parallel beams, the solid-state light emitter facilitates designing of an illumination system and color composition while reducing the numerical aperture of projection lenses.

Meanwhile, a sufficient amount of light is to be secured when the solid-state light emitter is employed. An example is herein described in which a laser diode is employed as the light source. In order to emit relatively bright light, a planar matrix of laser diodes is disposed such that the laser diodes are close to each other.

To continue lighting of such laser diodes while maintaining a desired amount of light until the end of lifespan of the laser diodes, the laser diodes are to be sufficiently cooled down. As one approach to cooling down the laser diodes, image projectors often employ a cooler such as a fan. For example, JP-2016-080758-A discloses an image projector that includes a heat dissipation plate to which heat is conducted from a laser diode. The heat dissipation plate is disposed near a light source device to dissipate heat out of the image projector by use of a cooler such as a fan.

Generally, image projectors also include a power supply device to supply power to, e.g., the light source device, the image display, and the cooler, and an electrical equipment substrate, such as a control substrate or circuit board, to control lighting of the laser diode. To prevent malfunction and damages due to excessive heating of the power supply device and heat generated by electronic parts mounted on the electrical equipment substrate, the cooler such as a fan exhausts heat out of the image projectors to cool down inside the image projectors.

Typically, in the image projectors employing solid-state light emitters (e.g., laser diodes) as the light source device, the laser diodes generate a relatively large amount of heat to emit relatively bright light. Therefore, a heat dissipation surface of a heat dissipation plate to which heat is conducted from the laser diodes is enlarged. In short, an upsized heat dissipation plate is typically employed in the image projectors. Increasing the heat dissipation plate in size leads to an increase of an entire image projector in volume and in weight. An entirely upsized image projector increases a space to install the image projector, restricting conditions on where to install the image projector. To blow an equalized cooling air to the upsized heat dissipation plate, an upsized fan or a plurality of fans are to be employed. That is, the image projector is upsized. In addition, such an upsized fan or a plurality of fans increases noise.

Meanwhile, as one approach to space saving of image projectors, JP-2015-022147-A discloses a projector that includes a power supply housing and a projection part main unit. The power supply housing is supported by a duct, while housing a power supply circuit for converting electric power supplied from the duct. The projection part main unit houses a projection part for projecting an image and is supported by the power supply housing such that a projection direction of the image is adjustable.

In the projector of JP-2015-022147-A, the power supply housing (i.e., power supply device) and the projection part main unit (i.e., projecting device) are independent from each other, thus saving a space of the projector. However, in the projector of JP-2015-022147-A, the power supply housing and the projection part main unit are disposed via a supporter, which hampers flexible installation of the projector. In addition, the projector of JP-2015-022147-A does not reduce noise from a cooler that cools down a light source disposed in the projection part main unit.

In light of the above-described problems, it is a general object of the present disclosure to provide an improved and useful image projector that includes a lighter and downsized projecting device, thereby enhancing flexible installation of the image projector, while suppressing noise from the projecting device.

### SUMMARY

In order to achieve the above-mentioned object, there is provided an image projector according to claim 1. Advantageous embodiments are defined by the dependent claims. Advantageously, the image projector includes a first housing, a second housing, a power transmitter, and a heat transporter. The first housing includes a light source, an image display, an illumination optical device, and a projection optical device. The light source emits light. The image display forms an image with the light from the light source. The illumination optical device directs the light from the light source to the image display. The projection optical device projects the image formed by the image display. The second housing includes a power source, a heat dissipator, and a cooler. The power source supplies power. The heat dissipator dissipates heat. The cooler exhausts the heat to an outside of the image projector. The power transmitter couples the first housing and the second housing to each other to transmit the power from the second housing to the first housing. The heat transporter couples the first housing and the second housing to each other to transport heat from the first housing to the second housing.

Accordingly, the projecting device is lighter and downsized compared to typical projecting devices. In addition, the image projector can be flexibly installed while suppressing noise from the projecting device.

Advantageously, an image projecting system includes the image projector described above.

### BRIEF DESCRIPTION OF THE DRAWINGS

A more complete appreciation of the disclosure and many of the attendant advantages thereof will be more readily obtained as the same becomes better understood by reference to the following detailed description of embodiments when considered in connection with the accompanying drawings, wherein:
FIG. 1 is a schematic view of an image projector according to a first embodiment of the present disclosure;
FIG. 2 is a schematic view of an optical housing incorporated in the image projector of FIG. 1;
FIG. 3 is a schematic view of an optical path switching plate incorporated in the optical housing of FIG. 2;
FIG. 4 is a schematic view of a color component switching plate incorporated in the optical housing of FIG. 2;
FIG. 5 is a schematic view of an image projecting system according to a first embodiment of the present disclosure;
FIG. 6 is a schematic view of an image projector according to a second embodiment of the present disclosure;
FIG. 7 is a schematic view of an image projector according to a third embodiment of the present disclosure;
FIG. 8A is a partial view of an image projecting system according to a second embodiment of the present disclosure, particularly illustrating a first optical housing;
FIG. 8B is another partial view of the image projecting system according to the second embodiment of the present disclosure, particularly illustrating a single electrical equipment housing; and
FIG. 8C is yet another partial view of the image projecting system according to the second embodiment of the present disclosure, particularly illustrating a second optical housing.

The accompanying drawings are intended to depict embodiments of the present disclosure and should not be interpreted to limit the scope thereof. Also, identical or similar reference numerals designate identical or similar components throughout the several views.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that have the same function, operate in a similar manner, and achieve similar results.

Although the embodiments are described with technical limitations with reference to the attached drawings, such description is not intended to limit the scope of the disclosure and not all of the components or elements described in the embodiments of the present disclosure are indispensable to the present disclosure.

In a later-described comparative example, embodiment, and exemplary variation, for the sake of simplicity like reference numerals are given to identical or corresponding constituent elements such as parts and materials having the same functions, and redundant descriptions thereof are omitted unless otherwise required.

As used herein, the singular forms "a", "an", and "the" are intended to include the plural forms as well, unless the context clearly indicates otherwise.

Referring now to the drawings, embodiments of the present disclosure are described below.

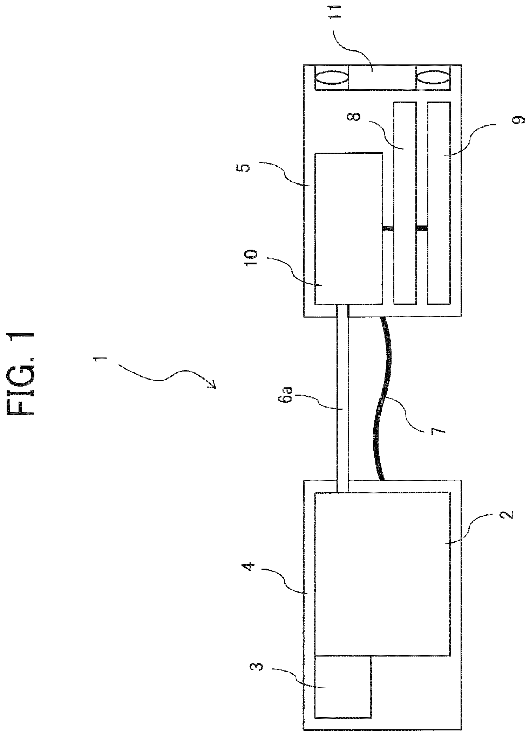

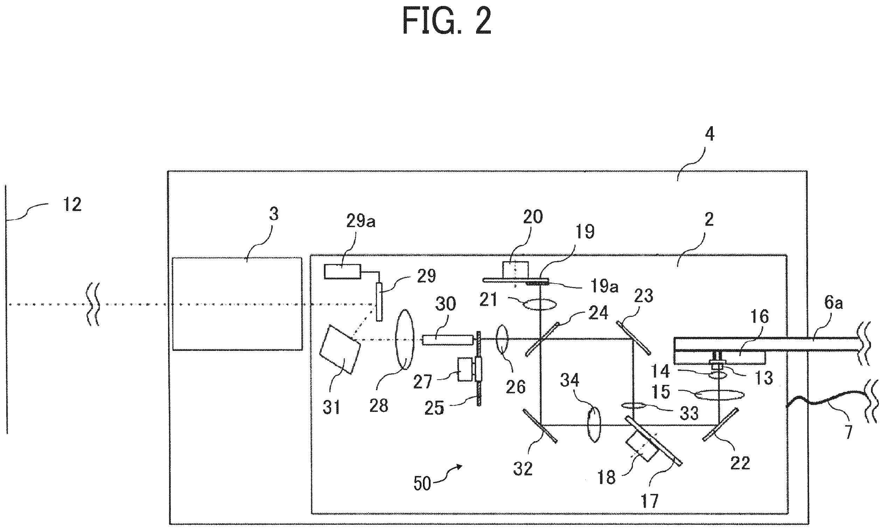

Initially with reference to FIGs. 1 and 2, a description is given of an image projector 1 according to a first embodiment of the present disclosure.

FIG. 1 is a schematic view of the image projector 1. FIG. 2 is a schematic view of an optical housing 4 incorporated in the image projector 1.

According to the present embodiment, the image projector 1 includes the optical housing 4 serving as a first housing, an electrical equipment housing 5 serving as a second housing, a power transmitter 7, and a heat pipe 6a serving as a heat transporter. Specifically, the optical housing 4 includes a laser diode 13 serving as a light source, an image forming panel 29 serving as an image display, an illumination optical device 50, and a projection unit 3 serving as a projection optical device. The laser diode 13 emits light. The image forming panel 29 forms an image with the light from the laser diode 13. The illumination optical device 50 is constructed of optical components from a coupling lens 14 to a third reflection mirror 31 along optical paths. The optical components direct the light from the laser diode 13 to the image forming panel 29. The projection unit 3 projects the image formed by the image forming panel 29. On the other hand, the electrical equipment housing 5 includes a power supply device 8 serving as a power source, a heat dissipation plate 10 serving as a heat dissipator, and an axial flow fan 11 serving as a cooler. The power supply device 8 supplies power to components of the image projector 1. The heat dissipation plate 10 dissipates heat generated in the image projector 1. The axial flow fan 11 exhausts the heat generated in the image projector 1 to an outside of the image projector 1. The power transmitter 7 couples the optical housing 4 and the electrical equipment housing 5 to each other. The power transmitter 7 transmits the power from the electrical equipment housing 5 to the optical housing 4. The heat pipe 6a also couples the optical housing 4 and the electrical equipment housing 5 to each other. The heat pipe 6a transports heat from the optical housing 4 to the electrical equipment housing 5. For example, the laser diode 13 generates heat. The heat pipe 6a transports the heat generated by the laser diode 13 from the optical housing 4 to the electrical equipment housing 5.

With continued reference to FIGs. 1 and 2, a description is now given of a construction of the image projector 1.

As illustrated in FIG. 1, the image projector 1 includes the optical housing 4 serving as a first housing and the electrical equipment housing 5 serving as a second housing. The optical housing 4 is a projecting device. The electrical equipment housing 5 is a power supply device. The power transmitter 7 and the heat pipe 6a connect or couple the optical housing 4 and the electrical equipment housing 5 to each other.

Specifically, the optical housing 4 accommodates an optical engine 2 and the projection unit 3. The optical engine 2 includes the laser diode 13 (i.e., light source), the image forming panel 29 (i.e., image display), and the optical components (i.e., illuminating optical device) that direct light from the laser diode 13 to the image forming panel 29. The projection unit 3 serves as a projection optical device that enlarges and projects the image formed by the image forming panel 29 onto a screen 12 illustrated in FIG. 2. The screen 12 is a surface subjected to image projection.

The optical housing 4 is not provided with an intake, a vent, or a fan. That is, the optical housing 4 does not cause an artificial air flow that cools down air inside the optical housing 4. The optical housing 4 has a dust-proof function and a water-proof function that prevent air and a liquid from coming inside and from going outside the optical housing 4. In short, the optical housing 4 is sealed.

On the other hand, the electrical equipment housing 5 accommodates the power supply device 8, a drive control substrate 9, the heat dissipation plate 10, and the axial flow fan 11. The power supply device 8 supplies power to the components of the image projector 1. The drive control substrate 9 serves as a drive controller that outputs control signals to control driving of the components of the image projector 1. The heat dissipation plate 10 serves as a heat dissipator. The axial flow fan 11 serves as a cooler.

The heat pipe 6a is contiguous with the optical engine 2 disposed inside the optical housing 4 on the one hand, and with the heat dissipation plate 10 disposed inside the electrical equipment housing 5 on the other hand. Thus, the heat pipe 6a connects or couples the optical engine 2 and the heat dissipation plate 10 to each other. In the present embodiment, the heat pipe 6a serves as a heat transporter that prompts heat to move from the optical housing 4 to the electrical equipment housing 5 with poor heat resistance.

The heat pipe 6a is a hollow pipe, made of a material having good thermal conductivity, enclosing a volatile liquid (i.e., hydraulic or working fluid). When an end of the heat pipe 6a is heated, the working fluid absorbs heat and turns into a vapor. The vapor then travels along the heat pipe 6a to the other end of the heat pipe 6a, and condenses back into a liquid while releasing the latent heat. Thus, heat is transferred from the optical housing 4 to the electrical equipment housing 5.

An inner wall of the hollow heat pipe 6a is provided with a porous layer. The working fluid is injected into the porous layer enough to wet the porous layer. Thus, the heat pipe 6a is sealed so as to create a vacuum in the heat pipe 6a.

In the image projector 1, the heat generated inside the optical engine 2 is conducted to the heat pipe 6a and evaporates the working fluid with which the inner wall of the heat pipe 6a is impregnated. The working fluid thus evaporated, that is, the vapor, travels to a coolest area of the heat pipe 6a, reaching the heat dissipation plate 10 disposed inside the electrical equipment housing 5. The heat dissipation plate 10 cools down and condenses the vapor back into a liquid. The liquid permeates the porous layer connected to a hot or evaporating portion of the heat pipe 6a on an optical housing 4 side and to a cold or condensing portion of the heat pipe 6a on an electrical equipment housing 5 side. Capillary pressure of the porous layer returns the liquid to the evaporating portion of the heat pipe 6a. The working liquid moves between the evaporating portion and the condensing portion inside the heat pipe 6a while transforming the phase thereof between a vapor phase and a liquid phase, thereby cooling down a heat generator.

The power transmitter 7 is connected or coupled to various electronic drive components disposed inside the optical housing 4. On the other hand, the power transmitter 7 is connected or coupled to the power supply device 8 and the drive control substrate 9 disposed inside the electrical equipment housing 5. The power transmitter 7 is a power and signal transmitter. Specifically, the power transmitter 7 supplies the power from the power supply device 8 to the electronic drive components of the optical housing 4. The power transmitter 7 also transmits the control signals from the drive control substrate 9 to the electronic drive components of the optical housing 4.

Unlike the optical housing 4, the electrical equipment housing 5 is provided with an intake, such as an intake port, and a vent such as an exhaust port. The axial flow fan 11 is configured to exhaust heat from an inside of the electrical equipment housing 5 to an outside of the electrical equipment housing 5.

Referring now to FIG. 2, a detailed description is given of the optical housing 4.

As illustrated in FIG. 2, the optical engine 2 includes the laser diode (LD) 13 as a solid-state light emitter.

The laser diode 13 is mounted on and held by a laser diode holder 16 serving as a holder. Preferably, the laser diode holder 16 is made of metal having good thermal conductivity, such as aluminum or copper, for example.

The coupling lens 14 is disposed opposite an emission face of the laser diode 13. The coupling lens 14 condenses laser beams emitted by the laser diode 13, rendering the divergent beams into parallel beams. The parallel beams are then directed to a first condenser lens 15. The first condenser lens 15 condenses the parallel laser beams coming from the coupling lens 14.

An opposed side of the laser diode holder 16, which is opposite the emission face of the laser diode 13, is connected or coupled to an end, as a first end, of the heat pipe 6a serving as a heat transporter.

The laser diode 13 is herein described that emits blue-component laser beams. Alternatively, the laser diode 13 may emit green-component laser beams or red-component laser beams.

In addition, the laser diode 13 and the coupling lens 14 are herein described as a single combination of a laser diode and a coupling lens employed in the image projector 1. Optionally, a plurality of laser diodes and coupling lenses may be employed.

The blue-component laser beams condensed by the first condenser lens 15 are directed to an optical path switching plate 17 via a first reflection mirror 22. The laser beams are formed as spots on the optical path switching plate 17. The spot size of the laser beams are determined to be an optimum size to prevent mixture of colors.

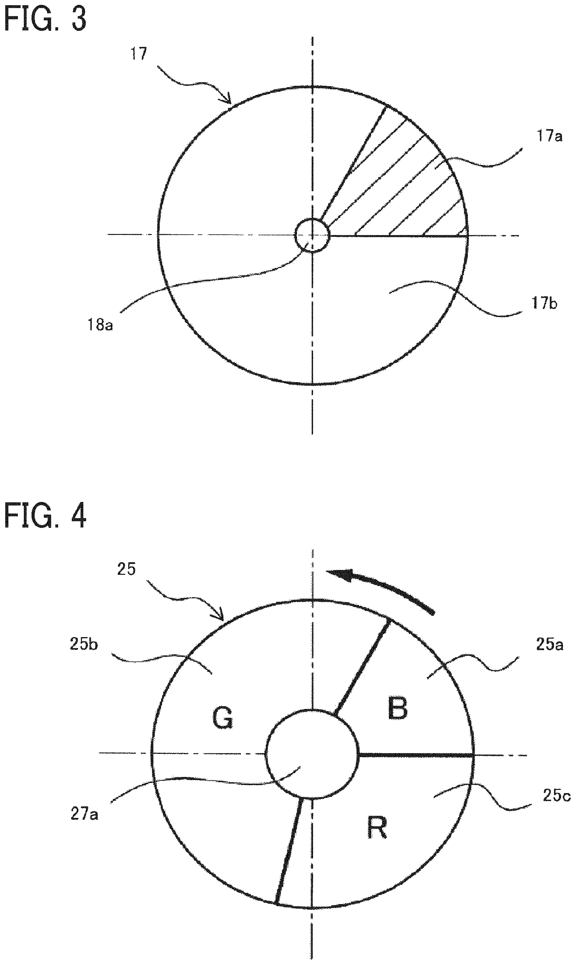

Referring now to FIG. 3, a description is given of the optical path switching plate 17 incorporated in the optical housing 4.

FIG. 3 is a schematic view of the optical path switching plate 17.

The optical path switching plate 17 is a rotary disk for dividing an optical path. In the present embodiment, the optical path switching plate 17 divides the optical path into two optical paths, namely, a first optical path and a second optical path. Specifically, the optical path switching plate 17 includes a reflection area 17a and a transmission area 17b, into which the optical path switching plate 17 is divided in a direction of rotation thereof in FIG. 3. The optical path switching plate 17 is oblique to an optical axis. In FIG. 2, the optical path switching plate 17 is disposed at an angle of 45° to the optical axis.

A stepping motor 18 illustrated in FIG. 2, for example, serves as a driver to drive and rotate the optical path switching plate 17 about a driving shaft 18a of the stepping motor 18 illustrated in FIG. 3.

The reflection area 17a of the optical path switching plate 17 is provided with a reflection film that reflects the blue-component laser beams. By contrast, the transmission area 17b of the optical path switching plate 17 is provided with an anti-reflection film that transmits the blue-component laser beams.

After passing through the transmission area 17b of the optical path switching plate 17, the blue-component laser beams from the laser diode 13 proceed to a phosphor wheel 19 along the first optical path. The first optical path continues from the phosphor wheel 19 to a light tunnel 30. Along the first optical path, light or fluorescence is directed from the phosphor wheel 19 to the light tunnel 30.

The phosphor wheel 19 is a rotary disk. A stepping motor 20, for example, serves as a driver to drive and rotate the phosphor wheel 19. A fluorescent film 19a is applied onto the phosphor wheel 19. When the phosphor wheel 19 is irradiated with the blue-component laser beams, the fluorescent film 19a generates fluorescence including green-component light and red-component light from the blue-component laser beams.

The fluorescent film 19a is made of, e.g., a mixture of a fluorescent material that generates green-component fluorescence and a fluorescent material that generates red-component fluorescence. In short, the fluorescent film 19a is made of, e.g., a fluorescent material that generates yellow fluorescence. Radiation of the blue-component laser beams excites such fluorescent materials, causing the fluorescent materials to generate fluorescence. Alternatively, for example, the fluorescent film 19a may be made of a fluorescent material having fluorescence distribution characteristics across a green-component spectrum and a red-component spectrum.

When the fluorescent film 19a is irradiated with the laser beams, fluorescence conversion generates a conversion loss, causing the fluorescent film 19a to generate heat. Note that rotation of the phosphor wheel 19 prevents the laser beams from reaching a given spot on the phosphor wheel 19, thereby further preventing degradation of the fluorescent film 19a.

When reaching the fluorescent film 19a of the phosphor wheel 19, the laser beams are diffused thereon. That is, the laser beams are not coherent light anymore. Therefore, as long as the fluorescent film 19a is irradiated with the laser beams, the laser beams do not cause problems in securing safety with respect to human eyes.

Along the first optical path from the optical path switching plate 17 to the phosphor wheel 19 are a sixth condenser lens 34, a fourth reflection mirror 32, a dichroic mirror 24, and a second condenser lens 21.

The sixth condenser lens 34 condenses the blue-component laser beams passing through the transmission area 17b of the optical path switching plate 17, to convert the blue-component laser beams into parallel beams. The fourth reflection mirror 32 reflects the blue-component laser beams thus converted into parallel beams by the sixth condenser lens 34 toward the dichroic mirror 24, which is an optical path composing element.

The dichroic mirror 24 has a function to transmit and direct the blue-component laser beams to the phosphor wheel 19. In addition, the dichroic mirror 24 has another function to reflect and direct fluorescence of a color component other than the blue component of laser beams toward a color component switching plate 25.

The second condenser lens 21 has a function to condense the parallel beams as spots on the fluorescent film 19a. In addition, the second condenser lens 21 has another function to condense and convert the fluorescence from the phosphor wheel 19 into parallel beams.

A third condenser lens 26 is disposed between the dichroic mirror 24 and the color component switching plate 25. The third condenser lens 26 condenses the fluorescence reflected by the dichroic mirror 24. The color component switching plate 25 is irradiated with the fluorescence thus condensed. The fluorescence or light passing through the color component switching plate 25 reaches the light tunnel 30.

Referring now to FIG. 4, a description is given of the color component switching plate 25 incorporated in the optical housing 4.

FIG. 4 is a schematic view of the color component switching plate 25.

A stepping motor 27 illustrated in FIG. 2, for example, serves as a driver to drive and rotate the color component switching plate 25 about a driving shaft 27a of the stepping motor 27, illustrated in FIG. 4, to switch colors.

The color component switching plate 25 is a rotary disk for dividing color components. Specifically, the color component switching plate 25 includes a first fan-shaped area 25a, a second fan-shaped area 25b, and a third fan-shaped area 25c, into which the color component switching plate 25 is divided in a direction of rotation thereof in FIG. 4. The first fan-shaped area 25a transmits the blue-component laser beams in the direction of rotation of the color component switching plate 25. The first fan-shaped area 25a is made of, e.g., a transparent glass plate or a filter that transmits light having a given wavelength band. Alternatively, the first fan-shaped area 25a may be a slit.

The second fan-shaped area 25b transmits the green-component fluorescence while absorbing or reflecting the red-component fluorescence. By contrast, the third fan-shaped area 25c transmits the red-component fluorescence while absorbing or reflecting the green-component fluorescence.

After being reflected from the reflection area 17a of the optical path switching plate 17, the blue-component laser beams from the laser diode 13 proceed to the light tunnel 30 along the second optical path.

Along the second optical path from the optical path switching plate 17 to the light tunnel 30 are a fifth condenser lens 33, a second reflection mirror 23, the dichroic mirror 24, the third condenser lens 26, and the color component switching plate 25.

The fifth condenser lens 33 condenses the blue-component laser beams reflected from the reflection area 17a of the optical path switching plate 17, to convert the blue-component laser beams into parallel beams. The parallel beams are directed from the fifth condenser lens 33 to the second reflection mirror 23. An anti-reflection film is formed on an incident face of the second reflection mirror 23. The laser beams enter the anti-reflection film formed on the incident face of the second reflection mirror 23. The second reflection mirror 23 reflects and directs the blue-component laser beams to the dichroic mirror 24.

As described above, the dichroic mirror 24 has a function to transmit the blue-component laser beams. The dichroic mirror 24 transmits and directs the blue-component laser beams to the third condenser lens 26. The third condenser lens 26 condenses and directs the blue-component laser beams to the color component switching plate 25. Thus, the color component switching plate 25 is irradiated with the blue-component laser beams. The blue-component laser beams pass through the first fan-shaped area 25a of the color component switching plate 25 to reach the light tunnel 30.

The light tunnel 30 reduces fluctuation of exposure. The light tunnel 30 can be replaced with any other device provided that the device reduces fluctuation of exposure. For example, a fly-eye lens may be used instead of the light tunnel 30.

After passing through the light tunnel 30, the blue-component laser beams, the green-component fluorescence, and the red-component fluorescence are condensed into parallel beams by a fourth condenser lens 28. Thereafter, the third reflection mirror 31 reflects the parallel beams coming from the fourth condenser lens 28 toward the image forming panel 29. The image forming panel 29 is, e.g., a digital micromirror device (DMD).

An image generator 29a controls the image forming panel 29. Specifically, the image generator 29a receives image data and inputs a modulation signal to the image forming panel 29 (e.g., digital micromirror device) according to the image data.

The image forming panel 29 includes a plurality of micromirror display elements, which are modulated according to the image data. With the plurality of micromirror display elements thus modulated, the image forming panel 29 reflects light for each color component toward the screen 12 via the projection unit 3 that includes a projection lens. Thus, the light is projected onto the screen 12 as image forming light. As a consequence, a magnified color image is formed on the screen 12.

Note that the construction of the optical engine 2 has been described as an example with reference to FIG. 2. Alternatively, the optical engine 2 may employ another projection system. For example, the light source is not limited to the laser diode 13. The light source may be another light source such as a light emitting diode (LED). In the present example of FIG. 2, the image forming panel 29 has been described as a reflective image forming panel that forms an image according to a modulation signal. Alternatively, the image forming panel 29 may be a transmissive image forming panel.

With continued reference to FIGs. 1 and 2, a description is now given of heat transportation between the optical housing 4 and the electrical equipment housing 5.

As illustrated in FIG. 2, the first end of the heat pipe 6a serving as a heat transporter is connected or coupled to the laser diode holder 16, which holds the laser diode 13, inside the optical engine 2 of the optical housing 4 in the image projector 1. The other end, as a second end, of the heat pipe 6a is connected or coupled to the heat dissipation plate 10 of the electrical equipment housing 5 as illustrated in FIG. 1. In short, the heat pipe 6a is contiguous with the laser diode holder 16 in the optical housing 4, and with the heat dissipation plate 10 in the electrical equipment housing 5. Accordingly, the heat generated by the laser diode 13 is conducted to the heat dissipation plate 10 of the electrical equipment housing 5 via the heat pipe 6a.

Since the electrical equipment housing 5 includes the axial flow fan 11 as a cooler, the heat conducted to the heat dissipation plate 10 is exhausted to the outside of the electrical equipment housing 5 together with heat generated in the power supply device 8 and in the drive control substrate 9.

Such a configuration obviates the need to provide coolers such as an intake, a vent, and a fan in the optical housing 4. Accordingly, the optical housing 4 is configured to be sealed with a dust-proof function and a water-proof function that prevent air and a liquid from coming inside and from going outside the optical housing 4.

According to the present embodiment described above, the image projector 1 includes the optical housing 4 and the electrical equipment housing 5 independent from each other. Accordingly, the optical housing 4, which accommodates the optical engine 2 and the projection unit 3, can be situated or installed flexibly to project images. Meanwhile, the electrical equipment housing 5, which accommodates other components including a cooler (i.e., axial flow fan 11) for a light source (i.e., laser diode 13), can be situated or installed independently from the optical housing 4.

Accordingly, the optical housing 4 is downsized and lighter compared to typical optical housings, thereby reducing or saving a space to install the optical housing 4. Elongated heat transporter (i.e., heat pipe 6a) and power transmitter (i.e., power transmitter 7) sufficiently separate the optical housing 4 and the electrical equipment housing 5 from each other, thereby enhancing flexible installation of the optical housing 4 and the electrical equipment housing 5.

Since the electrical equipment housing 5 accommodating a cooler (i.e., axial flow fan 11) for a light source (i.e., laser diode 13) is disposed independently from the optical housing 4 in the image projector 1, the image projector 1 of the present embodiment prevents noise caused by rotation of the cooler from disturbing viewers of projected images.

In addition, since the optical housing 4 and the electrical equipment housing 5 are separated from each other, air exhausted from the electrical equipment housing 5 does not flow to image projection light. Accordingly, stable images can be projected without being swayed.

Further, according to the present embodiment, the heat pipe 6a is employed as a heat transporter. The heat pipe 6a efficiently conducts heat from the optical housing 4 to the electrical equipment housing 5, thereby contributing to downsizing and lightening of the heat dissipation plate 10 and the electrical equipment housing 5.

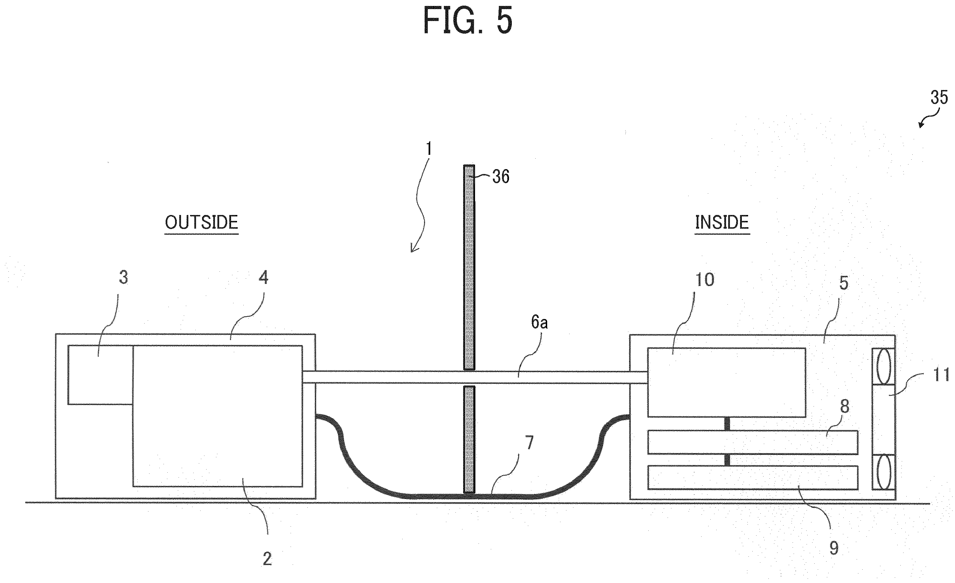

Referring now to FIG. 5, a description is given of an image projecting system 35 that incorporates the image projector 1 described above.

FIG. 5 is a schematic view of the image projecting system 35 according to a first embodiment of the present disclosure.

The image projecting system 35 includes a structure 36 and the image projector 1. Note that FIG. 5 illustrates a part of the structure 36. The optical housing 4 is disposed outside the structure 36 while the electrical equipment housing 5 is disposed inside the structure 36. In short, the optical housing 4 is installed outdoors while the electrical equipment housing 5 is installed indoors. An elongated heat pipe 6a is employed as a heat transporter, for example, to connect or couple the outdoor optical housing 4 and the indoor electrical equipment housing 5 to each other.

Generally, if an image projector is used outdoors where air pollution is worse than indoor air pollution, a fan often absorbs a large amount of dust into the image projector. The dust thus absorbed adheres to an electrical equipment substrate, a heat dissipation plate, and the like, thereby significantly degrading cooling performance.

To address this circumstance, an intake of the image projector is often provided with an air filter to remove the dust. However, since the air filter needs to be regularly replaced, the operation process increases together with cost. In particular, if the image projector is used under the environment with terrible air pollution, the air filters replaced at short intervals serve instead merely to increase the workload and the cost.

In addition, rainy weather may cause moisture to adhere to and enter the inside of, e.g., the power source and the projecting device. As a consequence, the product may be damaged, shortening the lifespan of the product. Therefore, outdoor use of image projectors has been typically difficult under the rain.

To address this circumstance, in the present embodiment, the optical housing 4 of the image projector 1 is disposed outside the structure 36 while the electrical equipment housing 5 of the image projector 1 is disposed inside the structure 36. Even when the screen 12 is disposed outside the structure 36 to project images outdoors, installation of the electrical equipment housing 5 inside the structure 36 prevents dust and moisture from entering the electrical equipment housing 5, and from adhering to and permeating the internal components of the electrical equipment housing 5, such as the heat dissipation plate 10, the power supply device 8, and the drive control substrate 9, without using a replacement part such as an air filter. Accordingly, the internal components of the electrical equipment housing 5 (e.g., heat dissipation plate 10, power supply device 8, drive control substrate 9) have an elongated lifespan.

In addition, according to the present embodiment, the optical housing 4 of the image projector 1 is sealed with a dust-proof function and a water-proof function that prevent air and a liquid form coming inside and from going outside the optical housing 4. Therefore, the optical housing 4 can be used outdoors without causing unfavorable circumstances described above. In other words, such a sealing configuration of the optical housing 4 prevents dust and moisture from entering the optical housing 4, and from adhering to and permeating the internal components of the optical housing 4, such as the optical engine 2 and the projection unit 3, thereby elongating the lifespan of the internal components of the optical housing 4 (e.g., optical engine 2, projection unit 3).

Further, as described above, the optical housing 4 is disposed outdoors while the electrical equipment housing 5 is disposed indoors. In other words, the optical housing 4 and the electrical equipment housing 5 are disposed separately from each other. With such a construction, air exhausted from the electrical equipment housing 5 does not flow to the image projection light. Accordingly, stable images can be projected without being swayed.

Note that, in the present embodiment, the optical housing 4 does not include coolers to cool down air, such as a vent, an intake, and a fan, thereby being sealed. However, an alternative optical housing may be employed provided that at least a cooler is included in the electrical equipment housing 5 for cooling down heat from the light source device via the heat transporter. For example, the optical housing 4 may include a cooler for other purposes. That is, in some embodiments, the optical housing 4 may be provided with a vent and an intake. In such a case, the optical housing 4 may not be sealed. According to the present embodiment, the optical housing 4 has both the dust-proof function and the water-proof function. Alternatively, the optical housing 4 may have at least one of the dust-proof function and the water-proof function.

The optical housing 4 may include a drive control substrate to control driving of the internal components of the optical housing 4. In such a case, the power supply device 8 of the electrical equipment housing 5 may supply power to the drive control substrate.

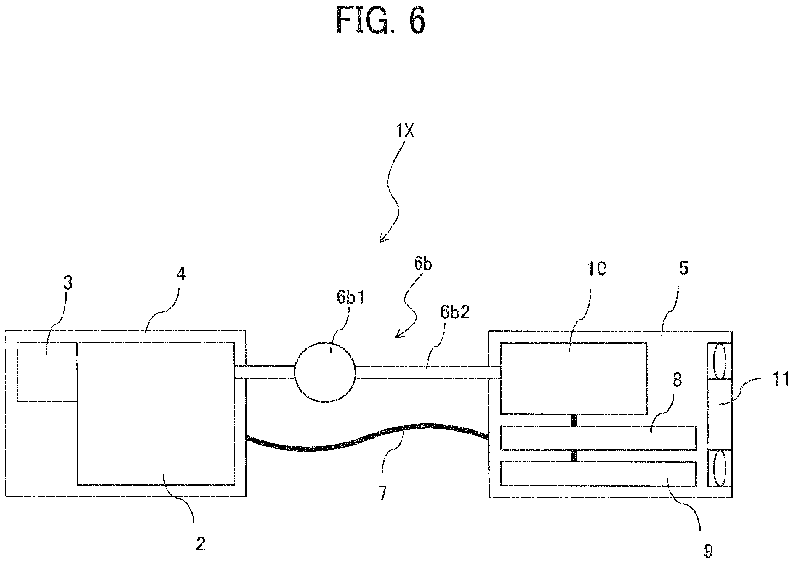

Referring now to FIG. 6, a description is given of an image projector 1X according to a second embodiment of the present disclosure. Note that redundant descriptions are herein omitted of aspects identical to those of the embodiment described above, unless otherwise required.

FIG. 6 is a schematic view of the image projector 1X.

The image projector 1X includes two housings, namely, the optical housing 4 serving as a first housing and the electrical equipment housing 5 serving as a second housing. The optical housing 4 is a projecting device. The electrical equipment housing 5 is a power supply device. The power transmitter 7 connects or couples the optical housing 4 and the electrical equipment housing 5 to each other.

In the first embodiment described above, the heat pipe 6a is employed as a heat transporter that connects or couples the optical housing 4 and the electrical equipment housing 5 to each other together with the power transmitter 7. By contrast, in the second embodiment, a liquid cooler 6b serving as a fluid cooler is employed as the heat transporter.

The liquid cooler 6b moves heat in association with a flow of a fluid (e.g., liquid). The liquid cooler 6b includes a pump 6b1 and a tube 6b2. The tube 6b2 is sealed and filled with the fluid inside. The tube 6b2 is interposed between the optical engine 2 serving as a heat generator and the heat dissipation plate 10 serving as a heat dissipator, thereby connecting or coupling the optical engine 2 and the heat dissipation plate 10. The pump 6b1 is coupled to the tube 6b2 to pump the fluid inside the tube 6b2. Specifically, the pump 6b1 causes the fluid to generate pressure in a given direction.

Heat generated inside the optical engine 2 (i.e., heat generator) of the optical housing 4 is conducted to the fluid inside the tube 6b2 of the liquid cooler 6b. The pump 6b1 moves the fluid bearing the heat from the optical engine 2 to the heat dissipation plate 10 (i.e., heat dissipator) of the electrical equipment housing 5.

Since the electrical equipment housing 5 includes the axial flow fan 11 as a cooler, the heat conducted to the heat dissipation plate 10 is exhausted to the outside of the electrical equipment housing 5 together with heat generated in the power supply device 8 and in the drive control substrate 9. The fluid from which the heat is removed returns to the optical engine 2 (i.e., heat generator). This cycle repeats. Thus, the liquid cooler 6b circulates the fluid, thereby transporting heat.

As described above, in the present embodiment, the liquid cooler 6b is employed as the heat transporter to conduct heat from the optical housing 4 to the electrical equipment housing 5 while circulating the fluid between the optical engine 2 (i.e., heat generator) and the heat dissipation plate 10 (i.e., heat dissipator). The heat thus conducted to the electrical equipment housing 5 is exhausted to the outside of the electrical equipment housing 5. Thus, the present embodiment further enhances cooling efficiency, and further downsizing the heat dissipation plate 10 and the electrical equipment housing 5.

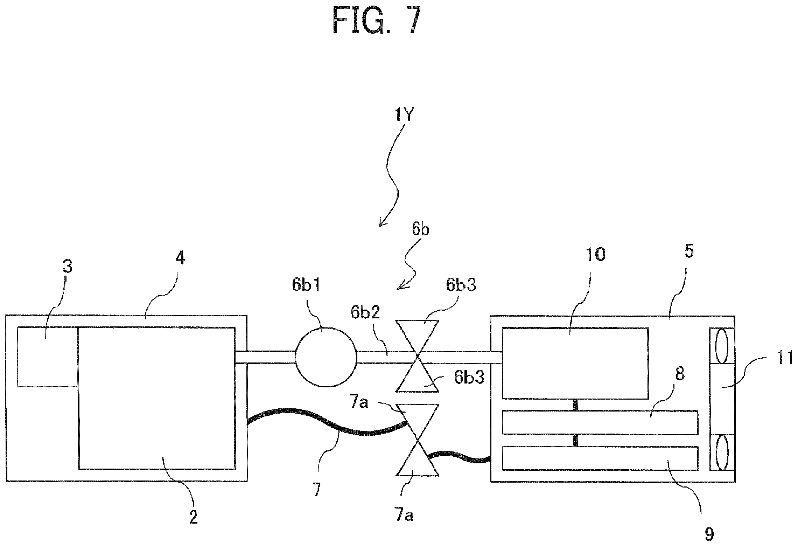

Referring now to FIG. 7, a description is given of an image projector 1Y according to a third embodiment of the present disclosure.

FIG. 7 is a schematic view of the image projector 1Y.

The image projector 1Y includes two housings, namely, the optical housing 4 serving as a first housing and the electrical equipment housing 5 serving as a second housing. The optical housing 4 is a projecting device. The electrical equipment housing 5 is a power supply device. The power transmitter 7 and the liquid cooler 6b, serving as a heat transporter, connect or couple the optical housing 4 and the electrical equipment housing 5 to each other.

In the third embodiment, each of the liquid cooler 6b (i.e., heat transporter) and the power transmitter 7 includes connectors. Specifically, the liquid cooler 6b includes fluid connectors 6b3. The power transmitter 7 includes electrical equipment connectors 7a.

The fluid connectors 6b3 are joints capable of connecting and disconnecting a flow path of the liquid cooler 6b. The tube 6b2 connected or coupled to the optical engine 2 is provided with one of the fluid connectors 6b3. The tube 6b2 connected or coupled to the heat dissipation plate 10 is provided with the other one of the fluid connectors 6b3.

On the other hand, the electrical equipment connectors 7a are joints capable of connecting and disconnecting a wiring of the power transmitter 7. The wiring connected or coupled to the optical housing 4 is provided with one of the electrical equipment connectors 7a. The wiring connected or coupled to the electrical equipment housing 5 is provided with the other one of the electrical equipment connectors 7a.

As described above, in the present embodiment, connectors (i.e., fluid connectors 6b3, electrical equipment connectors 7a) are employed to connect and disconnect the optical housing 4 and the electrical equipment housing 5 to and from each other. In other words, the connectors couple and separate the optical housing 4 and the electrical equipment housing 5 to and from each other, thereby facilitating carriage and storage of the image projector 1Y and enhancing work efficiency. Note that, in the third embodiment, the heat transporter is the liquid cooler 6b, but is not limited thereto.

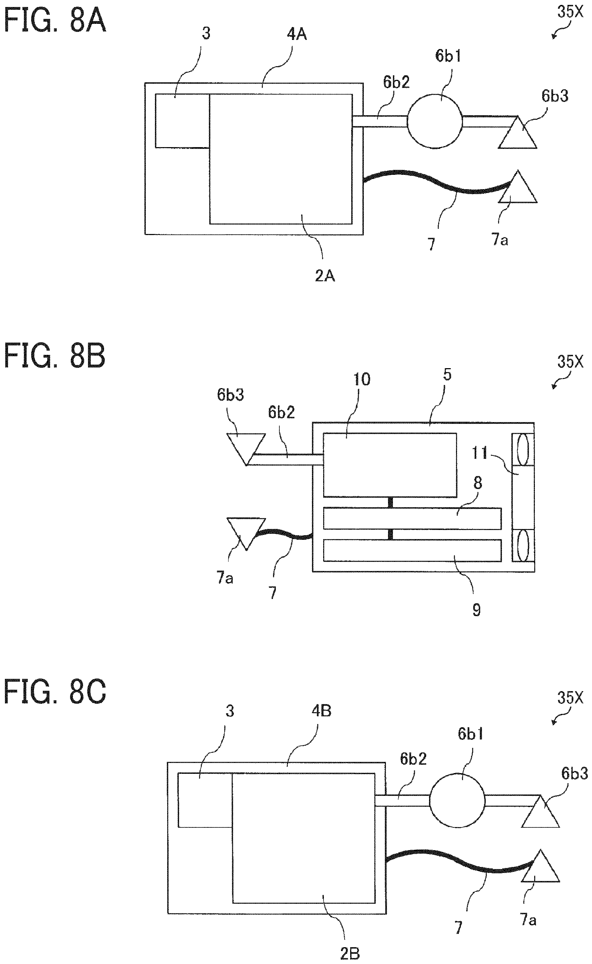

Referring now to FIGs. 8A through 8C, a description is given of an image projecting system 35X according to a second embodiment of the present disclosure.

FIGs. 8A through 8C illustrate the image projecting system 35X. Specifically, FIG. 8A is a partial view of the image projecting system 35X, particularly illustrating a first optical housing 4A. FIG. 8B is another partial view of the image projecting system 35X, particularly illustrating the single electrical equipment housing 5. FIG. 8C is yet another partial view of the image projecting system 35X, particularly illustrating a second optical housing 4B.

Unlike the image projecting system 35 according to the first embodiment, the image projecting system 35X of the second embodiment includes a plurality of optical housings 4, namely, the first optical housing 4A and the second optical housing 4B, connectable to the single electrical equipment housing 5.

A description is herein given of an image projecting system (i.e., image projecting system 35X) including two optical housings (i.e., first optical housing 4A, second optical housing 4B) connectable to and disconnectable from a single electrical equipment housing (i.e., electrical equipment housing 5) with reference to FIGs. 8A through 8C. However, the number of the optical housings 4 connectable to the single electrical equipment housing 5 is not limited to two.

The first optical housing 4A and the second optical housing 4B include a first optical engine 2A and a second optical engine 2B, respectively. The first optical engine 2A includes numerous laser diodes that emit light with a relatively high brightness while generating a relatively large amount of heat. By contrast, the second optical engine 2B includes laser diodes less than those of the first optical engine 2A. That is, the second optical engine 2B emits light with lower brightness than that emitted by the first optical engine 2A while generating a smaller amount of heat than the heat generated by the first optical engine 2A.

The electrical equipment housing 5 of the present embodiment has a construction similar to the construction of the electrical equipment housing 5 of the image projector 1Y according to the third embodiment described above. However, in the image projecting system 35X of the present embodiment, the heat dissipation plate 10 is available for the first optical housing 4A that generates heat in larger quantity than heat generated by the second optical housing 4B.

The electrical equipment housing 5 of the image projecting system 35X is connectable to any one of the first optical housing 4A and the second optical housing 4B with the fluid connectors 6b3 and the electrical equipment connectors 7a. Specifically, the fluid connector 6b3 attached to the tube 6b2 connected or coupled to the electrical equipment housing 5 is connectable to the fluid connector 6b3 attached to the tube 6b2 connected or coupled to the first optical housing 4A. Similarly, the electrical equipment connector 7a attached to the power transmitter 7 connected or coupled to the electrical equipment housing 5 is connectable to the electrical equipment connector 7a attached to the power transmitter 7 connected or coupled to the first optical housing 4A. On the other hand, the fluid connector 6b3 attached to the tube 6b2 connected or coupled to the electrical equipment housing 5 is connectable to the fluid connector 6b3 attached to the tube 6b2 connected or coupled to the second optical housing 4B. Similarly, the electrical equipment connector 7a attached to the power transmitter 7 connected or coupled to the electrical equipment housing 5 is connectable to the electrical equipment connector 7a attached to the power transmitter 7 connected or coupled to the second optical housing 4B. In either case, heat from one of the first optical housing 4A and the second optical housing 4B connected to the electrical equipment housing 5 is conducted to the electrical equipment housing 5, which exhausts the heat.

As described above, in the image projecting system 35X, the single electrical equipment housing 5 is connectable to and disconnectable from two or more optical housings 4, in this case, the first optical housing 4A and the second optical housing 4B. That is, a common electrical equipment housing (i.e., electrical equipment housing 5) is employed whereas a plurality of optical housings (e.g., first optical housing 4A, second optical housing 4B) is employed that includes optical engines (e.g., first optical engine 2A, second optical engine 2B) having different configurations with, e.g., different types of light sources. For example, even when a plurality of optical housings 4 is employed according to brightness of projection images, the single electrical equipment housing 5 is employed, thereby reducing cost or expenses. In addition, images can be projected simply by carrying the electrical equipment housing 5 while the plurality of optical housings 4 remains placed at a projection site, thereby enhancing usability.

Now, a description is given of advantages of the image projectors and the image projecting systems according to the embodiments, examples, and variations described above.

As illustrated in FIG. 1, an image projector (e.g., image projector 1) includes a first housing (e.g., optical housing 4), a second housing (e.g., electrical equipment housing 5), a power transmitter (e.g., power transmitter 7), and a heat transporter (e.g., heat pipe 6a).

Specifically, as illustrated in FIG. 2, the first housing includes a light source (e.g., laser diode 13), an image display (e.g., image forming panel 29), an illumination optical device (e.g., illumination optical device 50), and a projection optical device (e.g., projection unit 3). The light source emits light. The image display forms an image with the light from the light source. The illumination optical device is constructed of optical components (e.g., optical components from the coupling lens 14 to the third reflection mirror 31) along optical paths. The optical components direct the light from the light source to the image display. The projection optical device projects the image formed by the image display. On the other hand, the second housing includes a power source (e.g., power supply device 8), a heat dissipator (e.g., heat dissipation plate 10), and a cooler (e.g., axial flow fan 11). The power source supplies power to components of the image projector. The heat dissipator dissipates heat generated in the image projector. The cooler exhausts the heat generated in the image projector to an outside of the image projector. The power transmitter couples the first housing and the second housing to each other. The power transmitter transmits the power from the second housing to the first housing. The heat transporter also couples the first housing and the second housing to each other. The heat transporter transports heat from the first housing to the second housing.

For example, the light source generates heat. The heat transporter transports the heat generated by the light source from the first housing to the second housing.

The first housing may be a projecting device. The second housing may be a power supply device.

Accordingly, the projecting device is lighter and downsized compared to typical projecting devices. In addition, the image projector can be flexibly installed while suppressing noise from the projecting device.

As illustrated in FIG. 5, an image projecting system (e.g., image projecting system 35) includes a structure (e.g., structure 36) and the image projector described above. The first housing is disposed outside the structure while the second housing is disposed inside the structure.

Accordingly, even when images are projected outdoors, dust and moisture are prevented from entering the second housing, and from adhering to and permeating internal components of the second housing.

According to the embodiments described above, the image projector includes a lighter and downsized projecting device compared to a projecting device included in typical image projectors. In addition, the image projector can be flexibly installed while suppressing noise from the projecting device.

## Claims

1. An image projector (1) comprising:
a first housing (4), the first housing (4) including:
a light source (13) to emit light;
an image display (29) to form an image with the light from the light source (13);
an illumination optical device (50) to direct the light from the light source (13) to the image display (29); and
a projection optical device (3) to project the image formed by the image display (29);
a second housing (5), the second housing (5) including:
a power source (8) to supply power;
a heat dissipator (10) to dissipate heat; and
a cooler (11) to exhaust the heat to an outside of the image projector (1);
a power transmitter (7) to couple the first housing (4) and the second housing (5) to each other to transmit the power from the second housing (5) to the first housing (4); and
a heat transporter (6a, 6b) to couple the first housing (4) and the second housing (5) to each other to transport heat from the first housing (4) to the second housing (5).

2. The image projector (1) according to claim 1,
wherein the light source (13) generates heat, and
wherein the heat transporter (6a, 6b) transports the heat generated by the light source (13) from the first housing (4) to the second housing (5).

3. The image projector (1) according to claim 1 or 2,
wherein the first housing (4) is a projecting device, and
wherein the second housing (5) is a power supply device.

4. The image projector (1) according to any one of claims 1 to 3,
wherein the first housing (4) further includes a holder (16) to hold the light source (13), and
wherein the heat transporter (6a, 6b) is contiguous with the holder (16) in the first housing (4) and to the heat dissipator (10) in the second housing (5).

5. The image projector (1) according to any one of claims 1 to 4,
wherein the second housing (5) further includes a drive controller (9) to output a control signal, and
wherein the power transmitter (7) supplies the power from the power source (8) to the first housing (4), and transmits the control signal from the drive controller (9) to the first housing (4).

6. The image projector (1) according to any one of claims 1 to 5,
wherein the heat transporter (6a, 6b) is a heat pipe.

7. The image projector (1) according to any one of claims 1 to 5,
wherein the heat transporter (6a, 6b) is a fluid cooler to circulate a fluid, and
wherein the fluid cooler includes:
a tube (6b2) filled with the fluid inside; and
a pump (6b1) coupled to the tube (6b2) to pump the fluid.

8. The image projector (1) according to claim 7,
wherein the fluid cooler is a liquid cooler to circulate a liquid, and
wherein the tube (6b2) is filled with the liquid inside.

9. The image projector (1) according to any one of claims 1 to 8,
wherein the first housing (4) is sealed.

10. The image projector (1) according to claim 9,
wherein the first housing (4) does not include a cooler that cools down air.

11. The image projector (1) according to any one of claims 1 to 10,
wherein each of the power transmitter (7) and the heat transporter (6a, 6b) includes a connector (7a, 6b3) to couple and separate the first housing (4) and the second housing (5) to and from each other.

12. The image projector (1) according to claim 11,
wherein the connector (7a, 6b3) is a joint.

13. An image projecting system (35) comprising:
a structure (36); and
the image projector (1) according to any one of claims 1 to 12,
wherein the first housing (4) is disposed outside the structure (36), and
wherein the second housing (5) is disposed inside the structure (36).

14. The image projecting system (35) according to claim 13, wherein the image projector (1) further includes another first housing (4).
